# EUROPEAN PATENT APPLICATION

(11) **EP 4 282 523 A1**
(43) Date of publication of application: **29.11.2023**
(21) Application number: 21921079.6
(22) Date of filing: 25.01.2021
(51) Int. Cl.: B01J 23/22, B01D 53/86

(54) **DENITRATION CATALYST AND METHOD FOR PRODUCING SAME**

(71) Applicant: The Chugoku Electric Power Co., Inc., Hiroshima-shi, Hiroshima 730-8701 (JP); Tokyo Metropolitan Public University Corporation, Tokyo 163-0926 (JP)
(72) Inventor: KIYONAGA Eiji, Hiroshima-shi, Hiroshima 730-8701 (JP); YOSHIDA Kazuhiro, Hiroshima-shi, Hiroshima 730-8701 (JP); MORITA Keiichiro, Hiroshima-shi, Hiroshima 730-8701 (JP); MURAYAMA Toru, Hachioji-shi, Tokyo 192-0397 (JP); INOMATA Yusuke, Hachioji-shi, Tokyo 192-0397 (JP)
(74) Representative: HGF
(86) International application number: PCT/JP2021/002436
(87) International publication number: WO 2022/157971

(57) **Abstract**

Provided is a denitration catalyst that exhibits, in selective catalytic reduction reactions using ammonia as a reducing agent, an excellent denitration ratio at low temperatures and in the presence of water vapor. The denitration catalyst contains vanadium oxide as its main component and contains a second metal, wherein the second metal is at least one selected from the group consisting of Li, Na, K, Mg, and Ca. A compound having a crystalline phase that exhibits an excellent denitration ratio at low temperatures and in the presence of water vapor is produced by the use of the alkali metal or alkaline-earth metal as the second metal.

## Description

### TECHNICAL FIELD

The present invention relates to a denitration catalyst and a method for producing the denitration catalyst.

### BACKGROUND ART

Nitrogen oxides (e.g., NO, NO₂, NO₃, N₂O, N₂O₃, N₂O₄, N₂O₅) are among the pollutants produced by fuel combustion and emitted into the atmosphere. Nitrogen oxides cause acid rain, ozone layer depletion, photochemical smog, and so on and have serious impacts on the environment and human health. Thus, the treatment of nitrogen oxides is an important task.

A known technique for removing nitrogen oxides includes selective catalytic reduction using ammonia (NH₃) as a reducing agent (NH₃-SCR). As described in Patent Document 1, titanium oxide-supported vanadium oxide catalysts are widely used for the selective catalytic reduction. Titanium dioxide, which has low reactivity with sulfur oxides and is highly stable, is considered the best support.

On the other hand, the content of vanadium oxide supported in such catalysts is only at most around 1 wt% since it can oxidize SO₂ to SO₃, although it plays a major role in NH₃-SCR. Moreover, in the conventional NH₃-SCR, there is no choice but to use such titanium oxide-supported vanadium oxide catalysts at high temperatures of 350 to 400°C since they are hardly reactive at low temperatures.

Under such circumstances, a denitration catalyst containing 43 wt% or more of vanadium pentoxide and having a BET specific surface area of 30 m²/g or more has been created and found useful for denitration at 200°C or less (see Patent Document 2).

Patent Document 1: Japanese Unexamined Patent Application, Publication No. 2004-275852
Patent Document 2: PCT International Publication No. WO2018/047356

### DISCLOSURE OF THE INVENTION

### Problems to be Solved by the Invention

The denitration catalyst described in Patent Document 2 can exhibit good denitration efficiency at 200°C or less. However, there is still room to improve the denitration efficiency in the presence of water vapor because in many practical cases, the denitration catalyst is used under conditions where water vapor coexists with it. The inventors have conducted intensive studies to further improve the denitration catalyst disclosed in Patent Document 2 and, as a result, have found a denitration catalyst capable of exhibiting good denitration efficiency particularly at 200°C or less in the presence of water vapor.

It is an object of the present invention to provide a denitration catalyst capable of exhibiting excellent denitration efficiency at low temperature in the presence of water vapor during selective catalytic reduction using ammonia as a reducing agent.

### Means for Solving the Problems

(1) The present invention is directed to a denitration catalyst including: vanadium oxide as a main component; and at least one second metal M selected from the group consisting of Li, Na, K, Mg, and Ca.
(2) The present invention is directed to the denitration catalyst according to aspect (1), in which the vanadium oxide is V₂O₅, the second metal is at least one of Li, Na, or K, and the denitration catalyst has a molar ratio of the second metal to the V₂O₅ of 0.16 to 0.66.
(3) The present invention is directed to the denitration catalyst according to aspect (1) or (2), in which the denitration catalyst includes a Na_{0.33}V₂O₅ crystal phase.
(4) The present invention is directed to the denitration catalyst according to any one of aspects (1) to (3), in which the denitration catalyst has a diffuse reflectance UV-Vis spectrum with a ratio (400 nm : 700 nm) of absorption intensity at 400 nm to absorption intensity at 700 nm of 1:0.45 to 1:0.88, in which the absorption intensities are normalized by the absorption intensity at 400 nm.
(5) The present invention is directed to a method for producing the denitration catalyst according to any one of aspects (1) to (4), the method including calcining a precursor including the vanadium oxide and the second metal at 260 to 400°C.

### Effects of the Invention

The present invention provides a denitration catalyst capable of exhibiting excellent denitration efficiency at low temperature in the presence of water vapor during selective catalytic reduction using ammonia as a reducing agent.

### BRIEF DESCRIPTION OF THE DRAWINGS

FIG. 1 is a graph showing the denitration efficiencies of denitration catalysts each containing a different second metal element;
FIG. 2 is a graph showing the relationship between denitration efficiency and denitration temperature for each of denitration catalysts;
FIG. 3 is a graph showing the relationship between composition ratio and denitration efficiency for denitration catalysts;
FIG. 4 is an X-ray diffraction (XRD) chart showing the relationship between composition ratio and crystal phase for denitration catalysts;
FIG. 5 is a graph showing the relationship between composition ratio and BET specific surface area for denitration catalysts;
FIG. 6 is a graph showing the relationship between calcination temperature and denitration efficiency for denitration catalysts;
FIG. 7 is an XRD chart showing the relationship between calcination temperature and crystal phase for denitration catalysts;
FIG. 8 is a graph showing the results of thermogravimetry-differential thermal analysis (TG-DTA) measurement of denitration catalysts;
FIG. 9 is a graph showing the relationship between calcination temperature and diffuse reflectance UV-Vis spectrum for denitration catalysts; and
FIG. 10 is a graph showing the relationship between denitration efficiency and the ratio (400 nm : 700 nm) between absorption intensities normalized in FIG. 9.

### PREFERRED MODE FOR CARRYING OUT THE INVENTION

### Denitration Catalyst

An embodiment of the present invention is directed to a denitration catalyst including: vanadium oxide as a main component; and a second metal. The second metal is at least one selected from the group consisting of Li, Na, K, Mg, and Ca. The denitration catalyst according to an embodiment of the present invention exhibits higher denitration efficiency even in the presence of water vapor in a low-temperature environment than denitration catalyst s used in the conventional art.

Hereinafter, in some cases, denitration efficiency will be expressed as NO conversion rate. The NO conversion rate is expressed by formula (1) below. NO conversion rate (%) = (NO concentration before denitration reaction - NO concentration after denitration reaction)/(NO concentration before denitration reaction) × 100 (1)

### Vanadium Oxide

Examples of the vanadium oxide used in the denitration catalyst according to an embodiment of the present invention include vanadium(II) oxide (VO), vanadium(III) trioxide (V₂O₃), vanadium (IV) tetroxide (V₂O₄), and vanadium (V) pentoxide (V₂O₅). The vanadium oxide is preferably vanadium pentoxide. During the denitration reaction, the V atom of vanadium pentoxide may have a valency of 2, 3, 4, or 5.

The denitration catalyst preferably contains at least 50 wt%, more preferably at least 60 wt% of vanadium oxide in the form of vanadium pentoxide.

### Second Metal

The second metal used in the denitration catalyst according to an embodiment of the present invention is at least one selected from the group consisting of Li, Na, K, Mg, and Ca. By containing the second metal, the denitration catalyst composed mainly of vanadium oxide can exhibit higher denitration efficiency even in the presence of water vapor in a low-temperature environment than conventional denitration catalysts.

### Second Metal Content

When the vanadium oxide is vanadium(V) pentoxide (V₂O₅), the molar ratio of the second metal to the vanadium(V) pentoxide (V₂O₅) is preferably 0.16 to 0.66, more preferably 0.33 to 0.66. The molar ratio of the second metal to the vanadium(V) pentoxide (V₂O₅) is preferably 0.16 to 0.66 because the second metal and the vanadium(V) pentoxide (V₂O₅) present in such a molar ratio are considered to form a specific crystal phase that will particularly contribute to increasing the denitration efficiency at low temperature in the presence of water vapor.

### Crystal Phase of the Denitration Catalyst

The denitration catalyst including Na as the second metal and vanadium (V) pentoxide (V₂O₅) preferably includes a Na_{0.33}V₂O₅ crystal phase, which is formed by the second metal and the vanadium (V) pentoxide (V₂O₅). The Na_{0.33}V₂O₅ crystal phase has a monoclinic crystal structure belonging to C2/m. Alternatively, Na and the vanadium (V) pentoxide (V₂O₅) may form a Na_{1.2}V₃O₈ crystal phase, which has a monoclinic crystal structure belonging to P2₁/m.

### Specific Surface Area of the Denitration Catalyst

The larger the specific surface area of the denitration catalyst, the more reaction sites are expected to be available, and the higher denitration efficiency is expected to be achievable. However, it is more important that the denitration catalyst according to an embodiment of the present invention has the preferred crystal phase mentioned above than that it just has a large specific surface area.

### Calcination Temperature for the Denitration Catalyst

The denitration catalyst according to an embodiment of the present invention is produced, for example, by calcining a precursor including vanadium oxide and a second metal, which will be described in detail later. The calcination temperature is preferably 260 to 400°C, more preferably 300 to 400°C.

At a calcination temperature of 260°C or more, the denitration catalyst precursor including vanadium oxide and a second metal would be decomposed and turned into a Na_{0.33}V₂O₅ crystal phase. As the calcination temperature increases, the denitration catalyst comes to contain more V⁴⁺ due to desorption of O from V₂O₅. A favorable ratio should exist between the contents of V⁵⁺ and V⁴⁺ in the denitration catalyst since the denitration reaction can proceed through the redox cycle between V⁵⁺ and V⁴⁺. At a calcination temperature of 400°C or less, a favorable ratio should be reached between the contents of V⁵⁺ and V⁴⁺ in the denitration catalyst.

### Diffuse Reflectance UV-Vis Spectrum

The ratio between V⁵⁺ and V⁴⁺ in the denitration catalyst can be estimated based on its diffuse reflectance UV-Vis spectrum, which can be measured by known methods. In the diffuse reflectance UV-Vis spectrum, the intensity of absorption at 400 nm corresponds to the amount of V⁵⁺ in the denitration catalyst. Also in the diffuse reflectance UV-Vis spectrum, the intensity of absorption at 700 nm corresponds to the amount of V⁴⁺ in the denitration catalyst. In a diffuse reflectance UV-Vis spectrum normalized by the absorption intensity at 400 nm, the ratio of absorption intensity at 400 nm to that at 700 nm (400 nm : 700 nm) can indicate a favorable ratio between the contents of V⁵⁺ and V⁴⁺ in the denitration catalyst. The absorption intensity ratio (400 nm : 700 nm) is preferably 1:0.45 to 1:0.88.

### Other Substances

The denitration catalyst according to an embodiment of the present invention may contain any other substance that does not impair the advantageous effects of the present invention. For example, the denitration catalyst according to an embodiment of the present invention preferably contains carbon in addition to the substances described above. The presence of carbon as an impurity in the denitration catalyst may cause line or plane distortion in the lattice of the vanadium oxide crystal structure described above to allow the denitration catalyst to exhibit high denitration efficiency in a low-temperature environment. The content of carbon in the denitration catalyst is preferably 0.05 wt% or more and 3.21 wt% or less. The carbon content is more preferably 0.07 wt% or more and 3.21 wt% or less. The carbon content is more preferably 0.11 wt% or more and 3.21 wt% or less. The carbon content is more preferably 0.12 wt% or more and 3.21 wt% or less. The carbon content is more preferably 0.14 wt% or more and 3.21 wt% or less. The carbon content is more preferably 0.16 wt% or more and 3.21 wt% or less. The carbon content is more preferably 0.17 wt% or more and 3.21 wt% or less. The carbon content is more preferably 0.70 wt% or more and 3.21 wt% or less.

The denitration catalyst according to an embodiment of the present invention is preferably used for denitration reaction at 350°C or less. The denitration catalyst is also preferably used for denitration reaction at 300°C or less because it can exhibit high denitration efficiency. The denitration catalyst is also preferably used for denitration reaction at 200°C or less because it will not oxidize SO₂ to SO₃. The reaction temperature is more preferably 100 to 250°C, even more preferably 160 to 200°C. The reaction temperature may also be 80 to 150°C. At a reaction temperature of 300°C or more, a denitration catalyst including only vanadium(V) pentoxide (V₂O₅) may undergo a change, such as a reduction in specific surface area. Such a denitration catalyst cannot be used at a reaction temperature of 300°C or more. The denitration catalyst containing the second metal according to an embodiment of the present invention can maintain high denitration efficiency even at a reaction temperature of 300°C or more.

### Method for Producing the Denitration Catalyst

The denitration catalyst according to an embodiment of the present invention may be produced, for example, as described below. First, a precursor containing the components for the denitration catalyst is prepared. The precursor may contain, for example, an aqueous solution of a vanadate, which is a vanadium oxide source for the denitration catalyst. Examples of the vanadate include ammonium metavanadate, magnesium vanadate, strontium vanadate, barium vanadate, zinc vanadate, lead vanadate, and lithium vanadate.

The second metal for the denitration catalyst may be added in the form of, for example, a nitrate, chloride, sulfate, chelate complex, hydrate, ammonium compound, or phosphate compound of the metal to the aqueous vanadate solution to form the precursor. The chelate complex may be, for example, an oxalic or citric acid complex.

The prepared precursor solution for the denitration catalyst may be evaporated to dryness to give a precursor powder for the denitration catalyst. A calcination step may be performed including calcining the precursor powder at a specific temperature for a specific period of time to produce a powder of the denitration catalyst. In the calcination step, as mentioned above, the calcination temperature is preferably 260 to 400°C, more preferably 300 to 400°C.

The embodiments described above are not intended to limit the present invention and may be altered or modified within the scope where the object of the present invention can be achieved, and such alterations or modifications will fall within the scope of the present invention.

### EXAMPLES

Hereinafter, the present invention will be more specifically described with reference to examples. The examples are not intended to limit the present invention.

### Preparation of Denitration Catalyst

### Example 1

A precursor complex solution was prepared by dissolving ammonium vanadate (NH₄VO₃) and oxalic acid ((COOH)₂) in pure water. A precursor solution for a denitration catalyst was prepared by adding, to the precursor complex solution, a nitrate of Na (second metal) in such an amount as to satisfy the composition formula Na_{0.66}V₂O₅ and mixing them. The precursor solution was evaporated to dryness, and the dry product was calcined twice at a temperature of 300°C for a period of 4 hours in the air to form a denitration catalyst of Example 1. Other examples and a comparative example were performed to prepare denitration catalysts by the same procedure except that a different second metal or a different Na content was used in each of the other examples and that no second metal was added in the comparative example.

### Denitration Efficiency and Presence or Absence of Second Metal

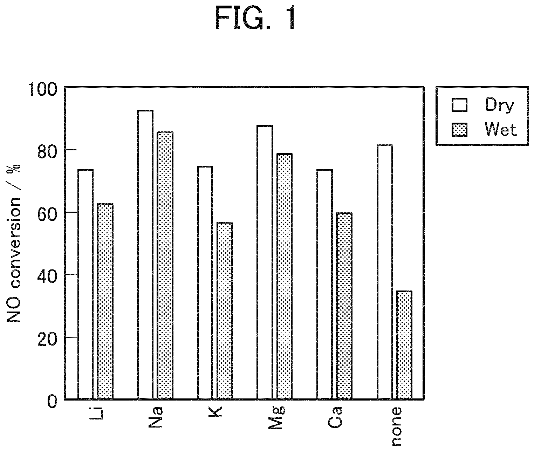

FIG. 1 is a graph comparing the denitration efficiency of the denitration catalyst of each of the examples, in which vanadium(V) pentoxide (V₂O₅) and Li, Na, K, Mg, or Ca were used as the matin component and the second metal, respectively, with that of the denitration catalyst of the comparative example (represented by "none"), in which only vanadium(V) pentoxide (V₂O₅) was used. In FIG. 1, the vertical axis represents NO conversion rate. To form the denitration catalyst, the alkali metal Li, Na, or K was used as the second metal in such an amount as to satisfy the composition formula M_{0.66}V₂O₅, in which M represents the second metal. To form the denitration catalyst, the alkaline-earth metal Mg or Ca was used as the second metal in such an amount as to satisfy the composition formula M_{0.33}V₂O₅, in which M represents the second metal. The reaction was performed at a temperature of 150°C using the catalyst in an amount of 0.375 g. In the reaction represented by "Dry" in FIG. 1, the reactant gas was an Ar gas containing NO (250 ppm), NH₃ (250 ppm), and O₂ (4 vol%), and the gas flow rate was 250 mL/min. In the reaction represented by "Wet" in FIG. 1, the reactant gas further contained H₂O (10 vol%) in addition to the components of the reactant gas in the "Dry" case.

FIG. 1 shows that the denitration catalyst of each of the examples, which includes vanadium oxide as the main component and Li, Na, K, Mg, or Ca as the second metal, exhibits a higher NO conversion rate particularly in the presence of water vapor than the denitration catalyst of the comparative example, which only includes vanadium oxide.

### Second Metal Type, Reaction Temperature, and Denitration Efficiency

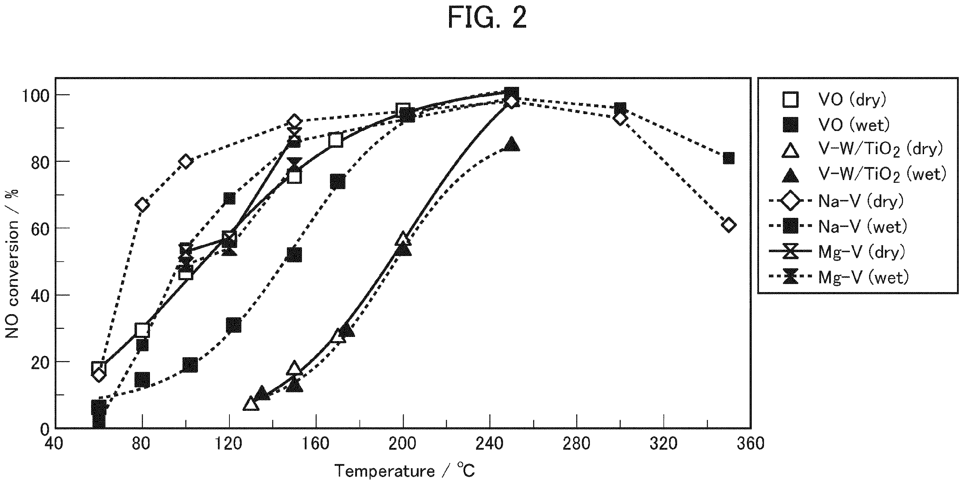

FIG. 2 is a graph showing the relationship between reaction temperature and denitration efficiency (NO conversion rate) for denitration catalysts of examples and comparative examples, in which vanadium(V) pentoxide (V₂O₅) is the main component. In FIG. 2, "VO" represents a catalyst of a comparative example, which only includes vanadium(V) pentoxide (V₂O₅). "V-W/TiO₂" represents a catalyst of another comparative example, which is a mimic of an industrial catalyst and has the composition of 1 wt% V₂O₅ and 5 wt% WO₃/TiO₂. "Na-V" and "Mg-V" represent denitration catalysts of examples, which include vanadium(V) pentoxide (V₂O₅) as the main component and Na and Mg respectively as the second metal and have the same composition as that shown in FIG. 1. The reactions represented by "Dry" and "Wet" in FIG. 2 were performed under the same gas conditions as those shown in FIG. 1 except that the reaction temperature was changed, during which the NO conversion rate was measured under the same conditions as those shown in FIG. 1.

FIG. 2 shows that the denitration catalysts each including vanadium oxide as the main component and Na or Mg as the second metal exhibit a higher NO conversion rate particularly at a low temperature of 120°C or less than the denitration catalysts of the comparative examples. It has also been found that the denitration catalyst of the comparative example including only vanadium(V) pentoxide (V₂O₅) cannot operate at a reaction temperature of 300°C or more while the denitration catalysts of the examples exhibit a high NO conversion rate of at least 80% even at a reaction temperature of at least 300°C or approximately 350°C.

### Second Metal Content

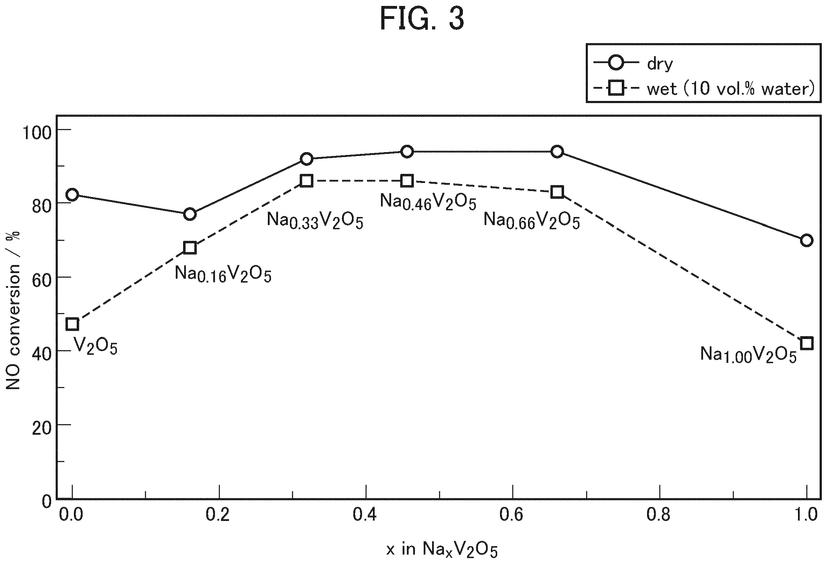

FIG. 3 is a graph showing the relationship between the NO conversion rate and the composition of denitration catalysts including vanadium(V) pentoxide (V₂O₅) as the vanadium oxide component and Na as the second metal. In FIG. 3, the horizontal axis represents the molar ratio of Na to vanadium pentoxide, and the vertical axis represents the NO conversion rate. The reactions represented by "Dry" and "Wet" in FIG. 3 were performed under the same conditions as those shown in FIG. 1. FIG. 3 shows that denitration catalysts with a molar ratio of Na to vanadium(V) pentoxide (V₂O₅) in the range of 0.16 to 0.66 can exhibit high NO conversion rates.

### Crystal Phase of Denitration Catalyst

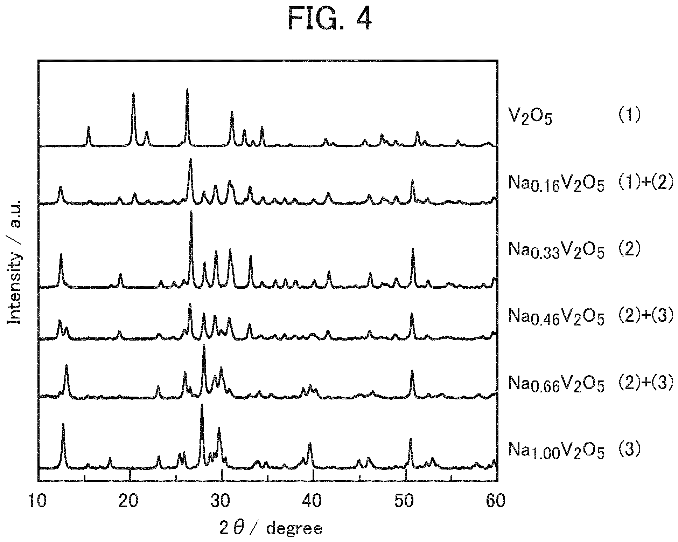

FIG. 4 is a graph showing the XRD charts of denitration catalysts containing Na as the second metal and having different Na-to-vanadium(V) pentoxide (V₂O₅) molar ratios. As shown in FIG. 3, denitration catalysts with the compositions: V₂O₅, Na_{0.33}V₂O₅, and Na_{1.00}V₂O₅ were observed to show sets of peaks attributed to the single crystal phases of V₂O₅ (1), Na_{0.33}V₂O₅ (2), and Na_{1.2}V₃O₈ (3), respectively. Another denitration catalyst with the composition Na_{0.16}V₂O₅ was observed to show peaks attributed to both the crystal phases (1) and (2). Further denitration catalysts with the compositions: Na_{0.46}V₂O₅ and Na_{0.66}V₂O₅ were observed to show sets of peaks attributed to both the crystal phases (2) and (3). Thus, the results shown in FIGS. 3 and 4 suggest that denitration catalysts can exhibit high denitration efficiency when they include the Na_{0.33}V₂O₅ crystal phase (2) .

### Specific Surface Area of Denitration Catalyst

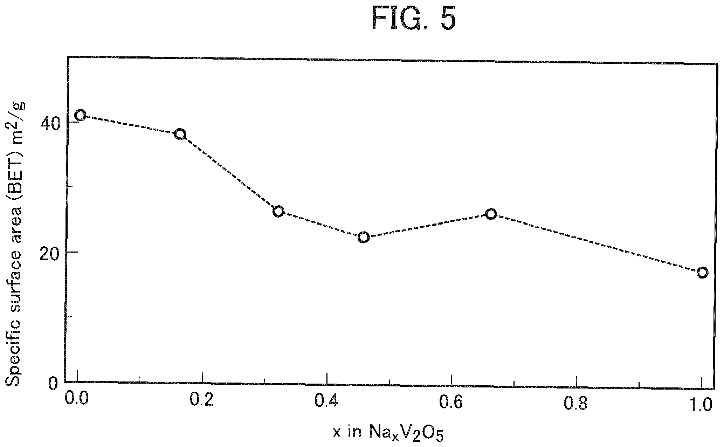

FIG. 5 is a graph showing the relationship between the specific surface area and composition of denitration catalysts. In FIG. 5, the horizontal axis represents the composition of denitration catalysts including vanadium(V) pentoxide (V₂O₅) as the vanadium oxide component and Na as the second metal, and the vertical axis represents the BET specific surface area (m²/g) of the denitration catalysts. FIG. 5 indicates that the specific surface area of the denitration catalyst decreases with increasing Na content. On the other hand, the results in FIGS. 3 and 5 taken together show that the specific surface area has no correlation with the NO conversion rate particularly when the ratio of Na to vanadium(V) pentoxide (V₂O₅) is 0.66 or less. This indicates that the presence of the Na_{0.33}V₂O₅ crystal phase (2) in the denitration catalyst more contributes to increasing the denitration efficiency than a simple increase in the specific surface area of the denitration catalyst.

### Calcination Temperature for Denitration Catalyst

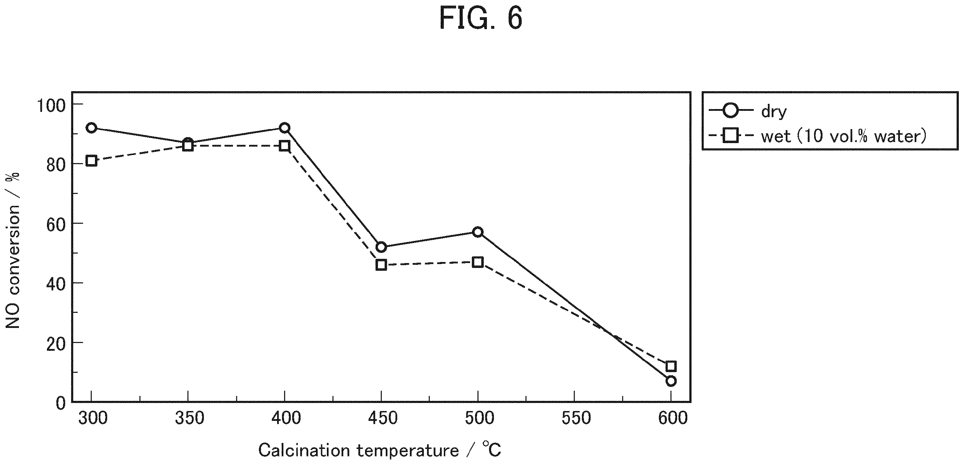

FIG. 6 is a graph showing the relationship between calcination temperature and NO conversion rate for denitration catalysts. In FIG. 6, the vertical axis represents the NO conversion rate, and the horizontal axis represents the calcination temperature (°C) for the denitration catalysts. FIG. 6 indicates that calculation at a temperature of 300 to 400°C can produce denitration catalysts that exhibit high NO conversion rates.

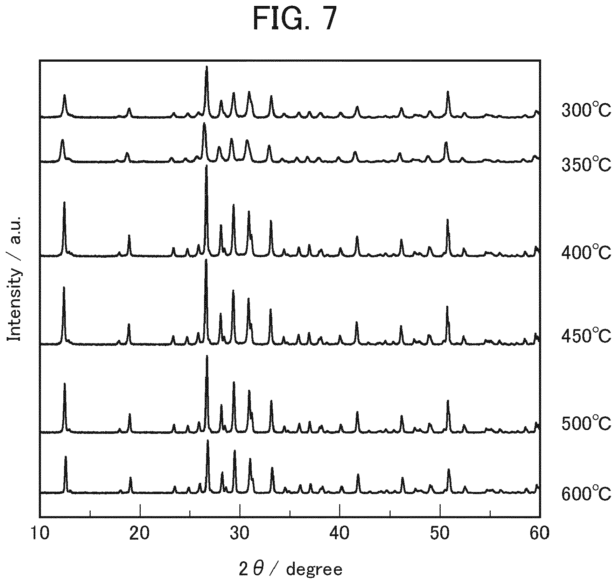

FIG. 7 is a graph showing the XRD charts of denitration catalysts produced at different calcination temperatures. The denitration catalysts shown in FIG. 7 have the composition Na_{0.33}V₂O₅. The results in FIG. 7 show that peaks attributed to the Na_{0.33}V₂O₅ crystal phase (2) were observed for all calcination temperatures. This indicates that the variations in NO conversion rate between different calcination temperatures are not attributable to the crystal phase type.

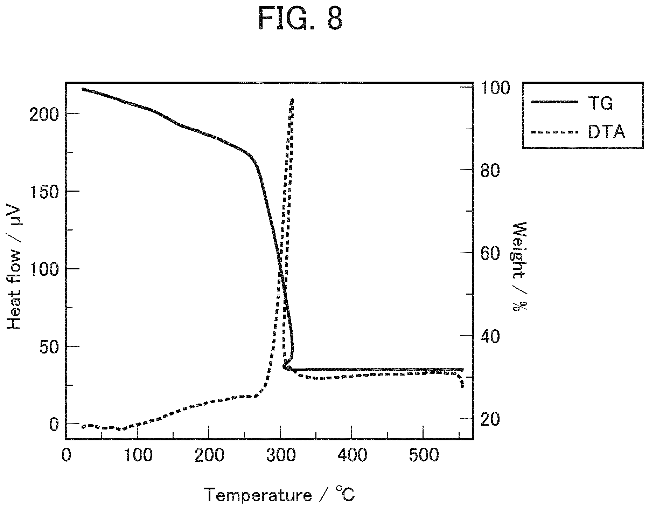

FIG. 8 is a chart showing the results of TG-DTA (thermogravimetry-differential thermal analysis) measurement of how a denitration catalyst precursor with the composition Na_{0.33}V₂O₅ changes in weight when heated. In FIG. 8, the solid line indicates the TG (thermogravimetric analysis) curve, and the broken line indicates the DTA (differential thermal analysis) curve. In FIG. 8, the right vertical axis represents the ratio (%) of the sample weight to its initial weight, which corresponds to the TG curve, and the left vertical axis represents the difference (µV) between the temperatures of the sample and the reference material, which corresponds to the DTA curve. In FIG. 8, the horizontal axis represents temperature (°C). The resulting TG curve in FIG. 8 indicates that significant weight loss occurs from 260°C to 300°C. From the resulting DTA curve, a large exothermic peak is observed at around 300°C. This suggests that the Na_{0.33}V₂O₅ crystal phase will form when the precursor is calcined at a temperature of at least 260°C.

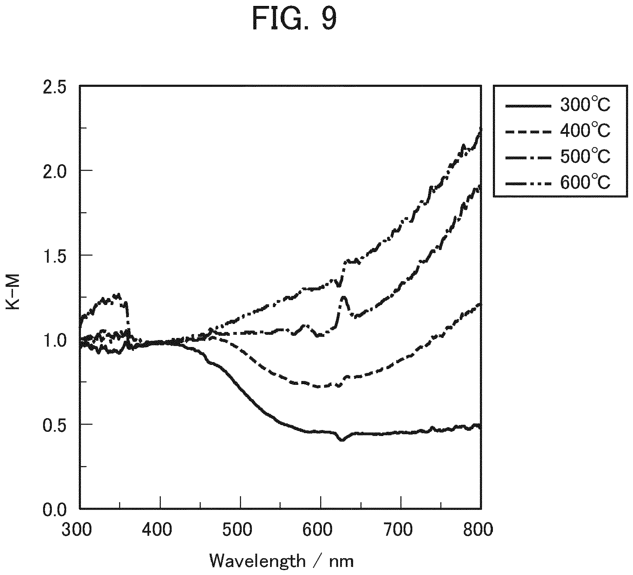

FIG. 9 is a graph showing the diffuse reflectance UV-Vis spectra of denitration catalysts produced by calcining a denitration catalyst precursor with the composition Na_{0.33}V₂O₅ at temperatures of 300°C, 400°C, 500°C, and 600°C, in which the spectra have been normalized by the absorption intensity at a wavelength of 400 nm. In FIG. 9, the vertical axis represents the K-M function used for quantitative analysis, and the horizontal axis represents wavelength (nm). The diffuse reflectance UV-Vis spectra were measured with an ultraviolet-visible-near infrared spectrophotometer (UV-3100PC manufactured by Shimadzu Corporation). From FIG. 9, the ratio of absorption intensity at 400 nm to that at 700 nm (400 nm : 700 nm) was calculated to be 1:0.45 for the denitration catalyst produced by calcination at a temperature of 300°C. The ratio (400 nm : 700 nm) was also calculated to be 1:0.88, 1:1.35, and 1:1.69, respectively, for the denitration catalysts produced by calcination at temperatures of 400°C, 500°C, and 600°C.

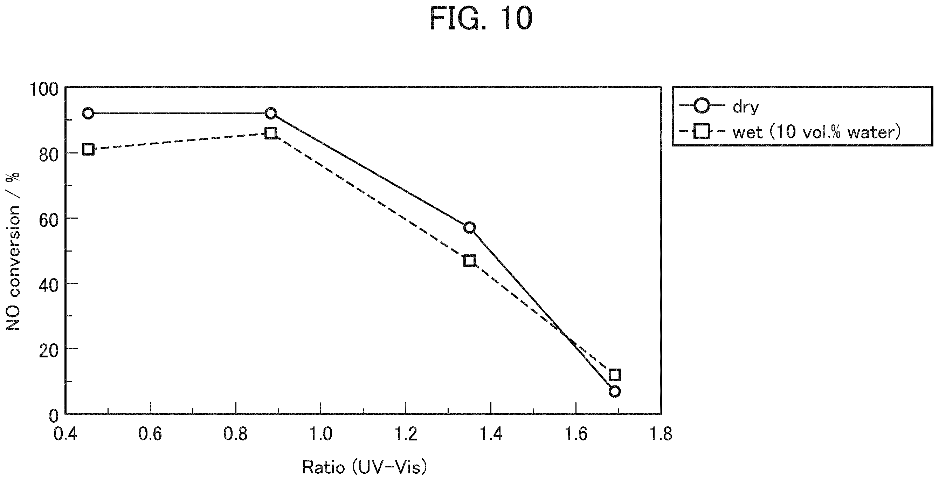

FIG. 10 is a graph combining the results shown in FIGS. 6 and 9. In FIG. 10, the vertical axis represents NO conversion rate (%), and the horizontal axis represents the ratio of absorption intensity at wavelength 700 nm to that at wavelength 400 nm (700 nm/400 nm). The results in FIG. 10 indicate that the absorption intensity ratio (400 nm : 700 nm) is preferably 1:0.45 to 1:0.88.

## Claims

1. A denitration catalyst comprising: vanadium oxide as a main component; and a second metal M,
the second metal M being at least one selected from the group consisting of Li, Na, K, Mg, and Ca.

2. The denitration catalyst according to claim 1,
wherein the vanadium oxide is V₂O₅,
wherein the second metal is at least one of Li, Na, or K, and
wherein the denitration catalyst has a molar ratio of the second metal to the V₂O₅ of 0.16 to 0.66.

3. The denitration catalyst according to claim 1 or 2, wherein the denitration catalyst comprises a Na_{0.33}V₂O₅ crystal phase.

4. The denitration catalyst according to any one of claims 1 to 3, wherein the denitration catalyst has a diffuse reflectance UV-Vis spectrum with a ratio (400 nm : 700 nm) of absorption intensity at 400 nm to absorption intensity at 700 nm of 1:0.45 to 1:0.88, wherein the absorption intensities are normalized by the absorption intensity at 400 nm.

5. A method for producing the denitration catalyst according to any one of claims 1 to 4,
the method comprising calcining a precursor comprising the vanadium oxide and the second metal at 260 to 400°C.
